# EUROPÄISCHE PATENTSCHRIFT

(11) **EP 2 751 823 B1**
(45) Veröffentlichungstag und Bekanntmachung des Hinweises auf die Patenterteilung: **23.03.2016**
(21) Anmeldenummer: 12751295.2
(22) Anmeldetag: 09.08.2012
(51) Int. Cl.: H01H 9/00, G05F 1/147

(54) **STUFENSCHALTER MIT SCHNECKENGETRIEBE**
TAP CHANGER COMPRISING A WORM GEAR
COMMUTATEUR À PRISES AVEC ENGRENAGE A VIS SANS FIN

(30) Priorität: 02.09.2011 DE 102011112365
(43) Veröffentlichungstag der Anmeldung: 09.07.2014
(73) Patentinhaber: Maschinenfabrik Reinhausen GmbH, 93059 Regensburg (DE)
(72) Erfinder: BIERINGER, Alfred, 94333 Geiselhöring (DE); LASSLEBEN, Daniel, 93351 Painten (DE); SCHMECKEBIER, Mario, 93057 Regensburg (DE)
(86) Internationale Anmeldenummer: PCT/EP2012/065597
(87) Internationale Veröffentlichungsnummer: WO 2013/029955

(56) Entgegenhaltungen:
- WO-A1-2011/029494
- DE-A1- 10 315 204
- DE-A1-102008 019 472
- DE-C1- 19 546 215

## Beschreibung

Die Erfindung betrifft einen Stufenschalter mit einem Schneckengetriebe, welches an einem Stufenschalterkopf angeordnet ist und mit Hilfe eines Antriebs zum Umschalten des Stufenschalters verwendet wird, mit Mitteln zur Drehmomenterfassung.

Aus der Offenlegungsschrift DE19744465C1 ist bereits bekannt, dass ein sehr großes Interesse daran besteht, Stufenschalter während des gesamten Zeitraums einer Lastumschaltung zu überwachen, um dadurch eine ordnungsgemäße Funktion gewährleisten zu können. Dies wird üblicherweise durch die Erfassung des Drehmomentverlaufs, einer Positionserfassung der jeweils aktuellen Stellung des Stufenschalters und dem Vergleich der ermittelten Wertepaare mit vorab gespeicherten Werten, realisiert. Der Drehmomentverlauf wird dabei bei jeder Lastumschaltung mit Hilfe der Effektivwerte des Stromes und der Spannung über die Wirkleistung des Antriebs ermittelt.

Das Dokument DE 103 15 204 A1 beschreibt ein Verfahren zur Überwachung eines Betriebszustandes eines Stufenschalters. Dabei sind im Inneren des Stufenschalters am Lastumschalter und am Wähler AOW-Sensoren angeordnet, die physikalische Größen und Parameter erfassen. Außerhalb des Stufenschalters ist eine Abfrageeinheit zur Funkabfrage der AOW-Sensoren angeordnet. Das Dokument DE 10 2008 019472 A1 beschreibt eine Vakuumpumpe mit einem Pumpenstator und einem Pumpenrotor. Der Pumpenrotor weist dabei eine Rotorantenne mit einem Transponder auf. Der Transponder ist mit einem Sensor zur Erfassung verschleißrelevanter Betriebsdaten und einem Speicher verbunden.

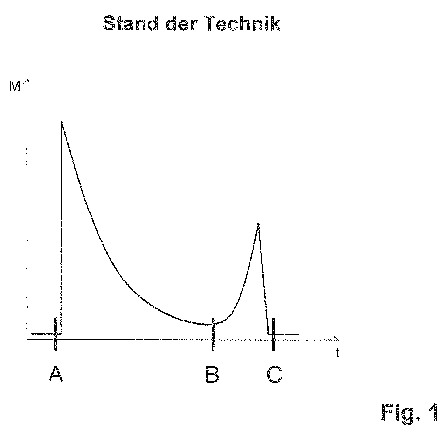

Üblicherweise treibt ein Elektromotor den Stufenschalter über ein Lastgetriebe, ein Kegelradgetriebe und ein Schneckengetriebe an. Diese Getriebe sind durch Wellen miteinander verbunden und weisen unterschiedliche Übersetzungsverhältnisse und Wirkungsgrade auf. Beide Faktoren können sich auf die Messungen der Drehmomente auswirken. Bei einem Riemengetriebe beispielsweise, kann es bei hohen Temperaturen zu einem Durchrutschen des Riemens kommen, wodurch der Wirkungsgrad sinkt. Doch auch tiefe Temperaturen haben einen starken Einfluss auf den Drehmomentverlauf. Fig. 1 zeigt einen vereinfachten Verlauf eines ersten Schaltvorgangs bei -20° Celsius. Auf der dargestellten Abszisse ist die Zeit t aufgetragen und die Ordinate bildet das Drehmoment M ab. Zeitpunkt A kennzeichnet hier den Beginn des Schaltvorgangs. Wie man deutlich erkennen kann, steigt das Drehmoment zunächst sehr stark an. Die Ursachen dafür sind unter anderem der kaltzähe Riemen im Lastgetriebe und die zähen Schmiermittel im Schnecken- und Kegelgetriebe. Nach dem Überwinden dieser ersten Widerstände sinkt der Verlauf des Drehmomentes bis zum Zeitpunkt B. Der zweite Anstieg, zwischen den Zeitpunkten B und C, hängt mit der Betätigung des Kraftspeichers zusammen. Kurz vor dem Auslösen benötigt dieser mehr Energie um die Federn zu spannen. Zum Zeitpunkt C ist der Schaltvorgang beendet. Während der zweite, durch den Kraftspeicher verursachte, Anstieg charakteristisch für den Drehmomentverlauf einer Umschaltung ist, ist der Erste, zwischen den Zeitpunkten A und B, stets temperaturabhängig und somit unbeständig und nicht berechenbar.

Nachteilig beim Stand der Technik ist, dass sich die drei Getriebe auch auf die Messfehler auswirken. Diese werden durch die Produkte der einzelnen Wirkungsgrade und Übersetzungsverhältnisse bestimmt und können zum Teil sehr groß werden. Dies gilt besonders für die ersten Schaltungen nach einem längeren Stillstand des gesamten Antriebsstranges.

Aufgabe der Erfindung ist es, bei einem Stufenschalter eine möglichst genaue Drehmomenterfassung bereitzustellen, die zuverlässig wirkt und den Temperatureinfluss berücksichtigt, um dadurch die auf die Messfehler wirkenden Faktoren des gesamten Antriebs zu eliminieren.

Die Aufgabe wird durch einen Stufenschalter mit einem Schneckengetriebe gelöst, wobei erfindungsgemäß das Schneckengetriebe Mittel zur Drehmomenterfassung aufweist, mit den Merkmalen des ersten Anspruches.

Der Erfindung liegt die allgemeine Idee zu Grunde, die Drehmomenterfassung näher hin zum Stufenschalter anzuordnen, um dabei die Faktoren des Antriebs und der Getriebe vollständig auszuschließen.

Die Erfindung soll nachfolgend anhand von Figuren erläutert werden.

Es zeigen
- Fig. 1: einen, aus dem Stand der Technik bekannten, Drehmomentverlauf eines Schaltvorgangs bei -20°C
- Fig. 2: ein erfindungsgemäßes Schneckengetriebe eines Stufenschalters mit Mitteln zur Drehmomenterfassung

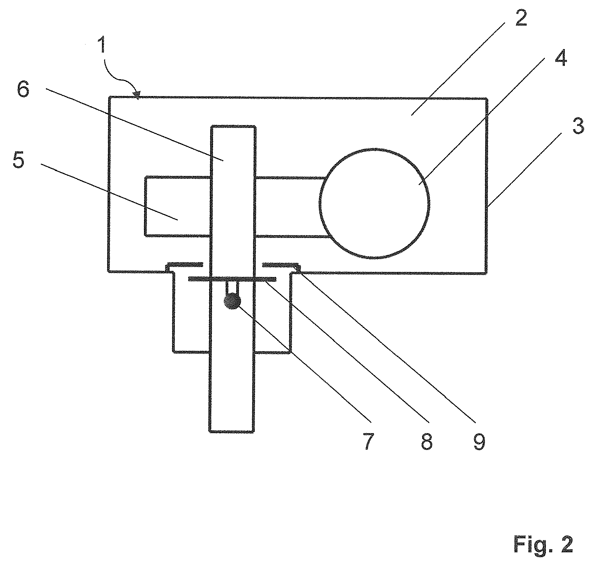

In Figur 2 ist ein Schneckengetriebe 1, bestehend aus einem oberen, als Deckel ausgebildeten, Gehäuseteil 2 und einem unteren Gehäuseteil 3, dargestellt. Im Inneren befindet sich unter anderem eine schraubenförmig ausgebildete Schnecke 4. Diese wird über, hier nicht dargestellte, Antriebsstangen und Getriebe von einem Motorantrieb angetrieben. Die Schnecke 4 ist mechanisch durch Formschluss mit einem Schneckenrad 5 verbunden und treibt dieses an. Das Schneckenrad 5 ist wiederum mit einer Welle 6 verbunden, welches direkt oder indirekt einen Stufenschalter und dessen Teile, wie z.B. Wähler, Kraftspeicher, etc. antreibt.

Auf der Welle 6 ist mindestens ein funkabfragbarer Oberflächenwellensensor 7 (SAW-Sensor) angebracht. Der funkabfragbare Oberflächenwellensensor 7 ist leitend mit einer Rotorantenne 8 verbunden. Diese ist radial ausgebildet und mechanisch mit der Welle 6 verbunden. Zur Rotorantenne 8 ist eine axial beabstandete, scheibenförmig radial ausgebildete, Statorantenne 9 angeordnet. Die Statorantenne 9 ist direkt oder über einen Halter fest im unteren Gehäuseteil 3 fixiert. Die Energie- und Datenübertragung erfolgt elektromagnetisch über die Rotorantenne 8 und die Statorantenne 9.

Besonders vorteilhaft ist, dass die Drehmomenterfassung nach der Schnecke 4 und dem Schneckenrad 5, also am Ausgang des Schneckengetriebes, erfolgt. Der Wirkungsgrad und die Übersetzung aller vorher verbauten Getriebe haben so keinen Einfluss auf die Messung; die Messfehler sind minimal. Außerdem müssen die Toleranzen, die sich mit der Zeit ändern sowie die Abnutzung der mechanisch beanspruchten Teile der Getriebe, bei den Auswertungen der Messungen nicht berücksichtigt werden. Ein weiterer großer Vorteil ist, dass die berührungslose Energie- und Datenübertragung im Vergleich zu Schleifkontakten oder direkten Verbindungen nahezu keine Wartung benötigt.

Zusätzlich ist der funkabfragbare Oberflächenwellensensor 7 in der Lage, die Temperatur der Welle 6 zu messen. Dadurch entsteht die Möglichkeit, die gemessenen Werte des Drehmomentverlaufs um den durch die Temperatur bestimmten Faktor zu korrigieren.

### Bezugszeichenliste

- 1: Schneckengetriebe
- 2: Oberes Gehäuseteil
- 3: Unteres Gehäuseteil
- 4: Schnecke
- 5: Schneckenrad
- 6: Welle
- 7: funkabfragbarer Oberflächenwellensensor
- 8: Rotorantenne
- 9: Statorantenne

## Patentansprüche

1. Stufenschalter mit einem Schneckengetriebe (1),
wobei das Schneckengetriebe (1) unmittelbar am Kopf des Stufenschalters angeordnet ist,
wobei das Schneckengetriebe (1) ein oberes Gehäuseteil (2) und ein unteres Gehäuseteil (3) aufweist,
wobei das Schneckengetriebe (1) eine von einem Motor angetriebene Schnecke (4) aufweist,
wobei die Schnecke (4) mechanisch mit einem Schneckenrad (5) verbunden ist,
wobei das Schneckenrad (5) mit einer Welle (6) verbunden ist,
wobei die Schnecke (4) die Welle (6) über das Schneckenrad (5) antreibt
wobei die Welle (6) den Stufenschalter antreibt,
wobei im Schneckengetriebe (1) Mittel zur Drehmomenterfassung vorgesehen sind,
wobei
die Mittel zur Drehmomenterfassung aus mindestens einem funkabfragbaren Oberflächenwellensensor (7), einer Rotorantenne (8) und einer Statorantenne (9) bestehen,
wobei
der mindestens eine funkabfragbare Oberflächenwellensensor (7) auf der Welle (6) befestigt ist,
wobei
die leitend mit dem mindestens einen funkabfragbaren Oberflächenwellensensor (7) verbundene Rotorantenne (8) an der Welle (6) befestigt ist und
wobei
die axial zur Rotorantenne (8) beabstandete Statorantenne (9) unmittelbar oder über einen Halter am unteren Gehäuseteil (3) fest angeordnet ist.

2. Stufenschalter nach Anspruch 1,
**dadurch gekennzeichnet,**
**dass** die Energie- und Datenübertragung elektromagnetisch über die Rotorantenne (8) und die Statorantenne (9) erfolgt, derart, dass sie berührungslos in den mindestens einen funkabfragbaren Oberflächenwellensensor (7) einkoppelbar ist.

3. Stufenschalter nach einem der Ansprüche 1 oder 2,
**dadurch gekennzeichnet,**
**dass** der mindestens eine funkabfragbare Oberflächenwellensensor (7) zusätzlich die Temperatur erfasst.

## Claims

1. Tap changer with a worm transmission (1),
wherein the worm transmission (1) is arranged directly at the head of the tap changer, wherein the worm transmission (1) has an upper housing part (2) and a lower housing part (3),
wherein the worm transmission (1) comprises a worm (4) driven by a motor,
wherein the worm (4) is mechanically connected with a worm wheel (5),
wherein the worm wheel (5) is connected with a shaft (6),
wherein the worm (4) drives the shaft (6) by way of the worm wheel (5) and
wherein the shaft (6) drives the tap changer,
wherein means for torque detection are provided in the worm transmission (1),
wherein the means for torque detection consist of at least one surface-wave sensor (7),
which can be interrogated by radio, a rotor antenna (8) and a stator antenna (9),
wherein the at least one surface-wave sensor (7) interrogatable by radio is fastened on the shaft (6),
wherein the rotor antenna (8) conductively connected with the at least one surface-wave sensor (7) interrogatable by radio is fastened to the shaft (6) and
wherein the stator antenna (9), which is axially spaced from the rotor antenna (8), is fixedly arranged at the lower housing part (3) directly or by way of a mount.

2. Tap changer according to claim 1, **characterised in that** the energy and data transmission takes place electromagnetically by way of the rotor antenna (8) and the stator antenna (9) in such a way that it can be contactlessly coupled into the at least one surface-wave sensor (7) interrogatable by radio.

3. Tap changer according to one of claims 1 and 2, **characterised in that** the at least one surface-wave sensor (7) interrogatable by radio additionally detects temperature.

## Revendications

1. Commutateur à gradins comprenant un engrenage à vis sans fin (1), cet engrenage à vis sans fin (1) étant directement monté au niveau de la tête du commutateur à gradins,
l'engrenage à vis sans fin (1) comprenant une partie de boîtier supérieure (2) et une partie de boîtier inférieure (3),
l'engrenage à vis sans fin (1) comprenant une vis sans fin (4) entraînée par un moteur,
la vis sans fin (4) étant reliée mécaniquement à une roue à vis sans fin (5),
la roue à vis sans fin (5) étant reliée à un arbre (6),
la vis sans fin (4) entraînant l'arbre (5) par l'intermédiaire de la roue à vis sans fin (5),
l'arbre (6) entraînant le commutateur à gradins,
l'engrenage à vis sans fin (1) comportant des moyens permettant de détecter le couple de rotation,
les moyens permettant de détecter le couple de rotation étant constitués par au moins un carter d'ondes de surface (7) interrogeable à distance, une antenne de rotor (8) et une antenne de stator (9),
le capteur d'ondes de surface interrogeable à distance (7) étant fixé sur l'arbre (6), l'antenne de rotor (8) qui est reliée de manière conductrice avec le capteur d'ondes surfaciques (7) étant fixée sur l'arbre (6), et l'antenne de stator (9) qui est située à distance axiale de l'antenne de rotor (8) étant fixée solidairement à la partie de boîtier inférieure (3), directement, ou par l'intermédiaire d'un support.

2. Commutateur à gradins conforme à la revendication 1,
**caractérisé en ce que**
la transmission d'énergie et de données s'effectue par voie électromagnétique par l'intermédiaire de l'antenne de rotor (8) et de l'antenne de stator (9) de sorte qu'elle puisse être couplée sans contact dans le capteur d'ondes de surface (7) interrogeable à distance.

3. Commutateur à gradins conforme à l'une des revendications 1 et 2,
**caractérisé en ce que**
le capteur d'ondes de surface (7) interrogeable à distance détecte en outre la température.
